(19) Europäisches Patentamt / European Patent Office / Office européen des brevets

(11) **EP 4 752 538 A1**

(12) **EUROPEAN PATENT APPLICATION**

(43) Date of publication:
03.06.2026   Bulletin 2026/23

(21) Application number: 25186308.0

(22) Date of filing: **30.06.2025**

(51) International Patent Classification (IPC):
**G01N 23/203** (2006.01)   **G01V 5/222** (2024.01)

(52) Cooperative Patent Classification (CPC):
**G01V 5/222; G01N 23/203**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.11.2024   CN 202411745389**

(71) Applicants:
• **Nuctech Company Limited**
**TongFang Building,**
**Shuangqinglu,**
**Haidian District**
**Beijing 100084 (CN)**
• **Tsinghua University**
**Haidian District,**
**Beijing 100084 (CN)**

(72) Inventors:
• **ZHAO, Bozhen**
**Beijing, 100084 (CN)**
• **ZOU, Xiang**
**Beijing, 100084 (CN)**
• **TAN, Linxia**
**Beijing, 100084 (CN)**
• **WANG, Junxiao**
**Beijing, 100084 (CN)**
• **ZHAI, Xingliang**
**Beijing, 100084 (CN)**
• **LI, Shuwei**
**Beijing, 100084 (CN)**
• **ZHANG, Wenjian**
**Beijing, 100084 (CN)**
• **LI, Jianmin**
**Beijing, 100084 (CN)**

(74) Representative: **Cabinet Beau de Loménie**
**103, rue de Grenelle / CS 90800**
**75340 Paris Cedex 07 (FR)**

(54) **METHOD OF IDENTIFYING MATERIAL AND APPARATUS OF IDENTIFYING MATERIAL**

(57)    The present disclosure provides a method of identifying a material, including: detecting, in response to a radiation ray scanning a target object, a radiation ray signal using a plurality of detector modules (521, 1121) of a radiation detector, where the plurality of detector modules (521, 1121) are arranged at different positions and ray signal channels are independent of each other; calculating N ray indexes corresponding to a position of each of the detector modules (521, 1121) according to the radiation ray signal detected by each of the detector modules (521, 1121), where N is an integer greater than or equal to 1; and identifying a material of the target object according to index values of each of the ray indexes at different positions. The present disclosure further provides an apparatus of identifying a material. The apparatus is particularly adapted to detect backscattering rays.

FIG. 19

EP 4 752 538 A1

## Description

TECHNICAL FIELD

The present disclosure relates to fields of security inspection, backscatter, and material identification, or other fields, in particular to a method of identifying a material and an apparatus of identifying a material.

BACKGROUND

When radiation rays are incident on an object, part of the rays will undergo Compton scattering. In this process, both the energy and flight direction of the radiation rays will change, where the flight direction of part of the radiation rays will change so much that they return to the side where a ray source is located, and such rays are referred to as backscatter rays, or backscatter for short.

In the related art, a radiation detector may convert detected rays into a large number of photons through a large-area radiosensitive medium, and then the photons are converted into electrical signals by a photoelectric conversion device. After being amplified by an amplifier, the corresponding digital signal sequence is generated by an ADC (analog-to-digital converter) sampling technology, and then an integration-based (also called current-type) processing of the digital signal is performed to obtain a backscatter scanning result.

When scanning one or more points of a target object, transmitted rays or scattered rays from the same scanning point are detected by a plurality of positions of the radiosensitive medium of the radiation detector. At present, only the result of summing the detection data of the respective positions is used as the radiation ray signal of the same scanning point. The radiation image is obtained on the basis of the radiation ray signal obtained based on the summation result, and then the radiation image is identified to obtain the material identification result.

In the process of achieving the inventive concept of the present disclosure, the inventors find that some information is lost in obtaining the radiation ray signal based on the summation result of the detection data and then processing the radiation ray signal to obtain the radiation image, which is not conducive to improving the accuracy of material identification.

SUMMARY

In view of the above-mentioned problem, the present disclosure provides a method of identifying a material and an apparatus of identifying a material.

According to a first aspect of the present disclosure, there is provided a method of identifying a material, including: detecting, in response to a radiation ray scanning a target object, a radiation ray signal using a plurality of detector modules of a radiation detector, where the plurality of detector modules are arranged at different positions and ray signal channels are independent of each other; calculating N ray indexes corresponding to a position of each of the detector modules according to the radiation ray signal detected by each of the detector modules, where N is an integer greater than or equal to 1; and identifying a material of the target object according to index values of each of the ray indexes at different positions.

In some embodiments, the N ray indexes include a first ray index and a second ray index, and the identifying a material of the target object according to index values of each of the ray indexes at different positions includes: mapping index values of each of the first ray index and the second ray index at different positions in a coordinate system, where a vertical axis of the coordinate system corresponds to the first ray index, and a horizontal axis of the coordinate system corresponds to the second ray index; and identifying the material of the target object according to a distribution of each of the first ray index and the second ray index in the coordinate system.

In some embodiments, the detecting, in response to a radiation ray scanning a target object, a radiation ray signal using a plurality of detector modules of a radiation detector includes: detecting, in response to a radiation source emitting a radiation ray to perform a flying spot scan on the target object, a backscattered ray signal reflected by the target object using the plurality of detector modules.

In some embodiments, the calculating N ray indexes corresponding to a position of each of the detector modules includes: calculating, for each of the ray indexes, a plurality of index values corresponding to the position of each of the detector modules, where the plurality of index values correspond one-to-one to a plurality of point positions of the flying spot scan performed on the target object using the radiation ray.

In some embodiments, before the calculating N ray indexes corresponding to a position of each of the detector modules, the method further includes: assigning a corresponding position identifier according to the position of each of the detector modules, where the N ray indexes corresponding to the position of each of the detector modules are bound to the position identifier of the detector module.

In some embodiments, before the calculating N ray indexes corresponding to a position of each of the detector modules, the method further includes: performing an energy threshold determination on a plurality of groups of ray signals to screen out ray signals in different energy ranges from each group of ray signals, where the plurality of groups of ray signals correspond to the plurality of detector modules one-to-one; and acquiring number of ray signals in different energy ranges in each group of ray signals.

In some embodiments, the calculating N ray indexes corresponding to a position of each of the detector modules includes: for each group of ray signals,

acquiring target number of ray signals in a target energy range among the different energy ranges; and calculating a ratio of the target number to number of total ray signals to obtain the first ray index, where the number of total ray signals is obtained according to the sum of the numbers of all ray signals in the different energy ranges.

In some embodiments, the calculating N ray indexes corresponding to a position of each of the detector modules includes: calculating a ratio of the number of total ray signals to a counting period to obtain the second ray index, where the number of total ray signals is obtained according to the sum of the numbers of all ray signals in the different energy ranges, and the counting period includes a period of acquiring the number.

In some embodiments, the identifying a material of the target object according to index values of each of the ray indexes at different positions includes: matching index values of each of the ray indexes at different positions with index information of different materials, respectively, where the index information of the different materials includes pre-calculated index values of the different materials at different positions; and identifying the material of the target object based on a matching result.

In some embodiments, the radiation ray is emitted by the radiation source, and two radiation detectors are provided on both sides of the radiation source; where the detecting a radiation ray signal using a plurality of detector modules of a radiation detector includes: detecting the radiation ray signal using a plurality of detector modules of each of the two radiation detectors.

In some embodiments, the two radiation detectors distributed on both sides of the radiation source have different structures, and respectively detects radiation ray signals corresponding to different regions of the target object, the structure of each of the radiation detectors is determined according to the region of the target object being detected, and the detector structure includes a detection region area of each of the plurality of detector modules.

In some embodiments, before the matching index values of each of the ray indexes at different positions with index information of different materials, respectively, the method further includes: determining index information of a to-be-matched material based on the structure of each of the two radiation detectors, where the index information of the to-be-matched material is calculated according to radiation ray signals based on the to-be-matched material detected by two preset radiation detectors, and the two preset radiation detectors and the two radiation detectors have one-to-one correspondence and substantially the same structure.

Another aspect of embodiments of the present disclosure provides an apparatus of identifying a material for performing the method of identifying a material described in any one of the above, the apparatus of identifying a material including: a radiation detector for detecting, in response to a radiation ray scanning a target object, a radiation ray signal using a plurality of detector modules, where the plurality of detector modules are arranged at different positions and ray signal channels are independent of each other; and a processor communicatively connected to the radiation detector to perform: calculating N ray indexes corresponding to a position of each of the detector modules according to the radiation ray signal detected by each of the detector modules, where N is an integer greater than or equal to 1; and identifying a material of the target object according to index values of each of the ray indexes at different positions.

BRIEF DESCRIPTION OF THE DRAWINGS

The above-mentioned contents and other objectives, features and advantages of the present disclosure will be more apparent through the following descriptions of embodiments of the present disclosure with reference to the accompanying drawings, in which:

FIG. 1 schematically shows an application scenario diagram of a backscatter detection apparatus in the related art;

FIG. 2 shows a ray event sequence incident on a backscatter detector according to an embodiment of the present disclosure;

FIG. 3 shows a schematic diagram of the number of photons excited by a single ray changing over time according to an embodiment of the present disclosure;

FIG. 4 shows a pulsed electrical signal with signal pile-up and superposition in the related art;

FIG. 5 schematically shows an application scenario diagram of a backscatter detection apparatus according to an embodiment of the present disclosure;

FIG. 6 shows a schematic layout diagram of a radiation source and a backscatter detector according to an embodiment of the present disclosure;

FIG. 7 shows a schematic layout diagram of a radiation source and a backscatter detector according to another embodiment of the present disclosure;

FIG. 8 shows a schematic layout diagram of a radiation source and a backscatter detector according to yet another embodiment of the present disclosure;

FIG. 9 shows a schematic diagram comparing response pulse waveforms of a fast-decay crystal (GAGG) and a slow-decay crystal (GOS) according to an embodiment of the present disclosure;

FIG. 10 shows a schematic waveform diagram of a pulsed electrical signal output by a detector module according to an embodiment of the present disclosure;

FIG. 11 schematically shows an application scenario diagram of an apparatus of identifying a material according to an embodiment of the present disclosure;

FIG. 12 shows a schematic diagram of data flow between a backscatter detector, electronics, and a processor according to an embodiment of the present disclosure;

FIG. 13 shows a schematic diagram of backscatter detection of detector modules at different positions according to an embodiment of the present disclosure;

FIG. 14 schematically shows energy spectra of backscatters from different materials at different positions after peak normalization;

FIG. 15 schematically shows the relative ray quantities of backscatters from different materials at different positions;

FIG. 16 shows a schematic diagram of data flow between a backscatter detector, electronics, and a processor according to another embodiment of the present disclosure;

FIG. 17 schematically shows a schematic waveform diagram of a group of ray signals containing noise;

FIG. 18 schematically shows energy spectra of backscatters from different materials at different positions;

FIG. 19 schematically shows a distribution diagram of ray indexes of different materials in a coordinate system according to an embodiment of the present disclosure.

The reference signs involved in the above drawings are as follows, and different application scenarios correspond to different embodiments:

100: Application scenario; 110: Radiation source; 120: Backscatter detector; 121: Sensitive volume; 122: Photoelectric converter; 130: Electronic device; 140: Target object; 150: Network; 160: Electronics.
500: Application scenario; 510: Radiation source; 520: Backscatter detector; 521: Detector module; 530: Electronic device; 540: Target object; 550: Network; 560: Electronics.
1100: Application scenario; 1110: Radiation source; 1120: Backscatter detector; 1121: Detector module; 1130: Electronic device; 1131: Processor; 1140: Target object; 1150: Network; 1160: Electronics.

It should be noted that, for the sake of clarity, dimensions of overall/local structures or overall/local regions in the accompanying drawings used to describe embodiments of the present disclosure may be exaggerated or reduced, i.e., the accompanying drawings are not drawn to an actual scale.

DETAILED DESCRIPTION OF EMBODIMENTS

Embodiments of the present disclosure will be described below with reference to the accompanying drawings. It should be understood, however, that these descriptions are merely exemplary and are not intended to limit the scope of the present disclosure. In the following detailed descriptions, for purposes of explanation, numerous specific details are set forth in order to provide a thorough understanding of embodiments of the present disclosure. It is obvious, however, that one or more embodiments may be implemented without these specific details. In addition, in the following descriptions, descriptions of well-known structures and technologies are omitted to avoid unnecessarily obscuring the concept of the present disclosure.

Terms used herein are for the purpose of describing embodiments only and are not intended to limit the present disclosure. Terms "comprising", "including" and the like used herein specify a presence of the feature, step, operation and/or component, but do not preclude a presence or addition of one or more other features, steps, operations or components.

All terms (including technical and scientific terms) used herein have the meaning as commonly understood by those skilled in the art, unless otherwise defined. It should be noted that the terms used herein should be construed to have meanings consistent with the context of the present description and should not be construed in an idealized or overly rigid manner.

Where expressions like "at least one of A, B, and C, etc." are used, they should generally be interpreted in accordance with the meaning of the expression as commonly understood by those skilled in the art (e.g., "a system having at least one of A, B and C" should include, but not be limited to, a system having A alone, having B alone, having C alone, having A and B, having A and C, having B and C, and/or having A, B, C, etc.).

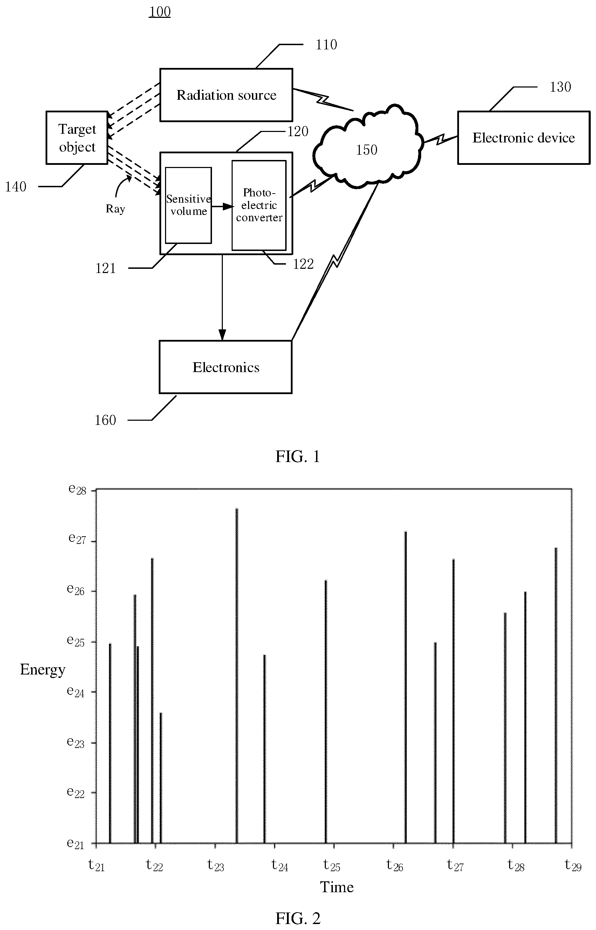

FIG. 1 schematically shows an application scenario diagram of a backscatter detection apparatus in the related art.

When radiation rays are incident on an object, part of the rays will undergo Compton scattering. In this process, both the energy and flight direction of the radiation rays will change, and the flight direction of part of the rays will change so much that they return to the side where the ray source is located. Such rays are referred to as backscatter rays, or backscatter for short.

As shown in FIG. 1, an application scenario 100 may include a backscatter detection apparatus and a target object 140. The backscatter detection apparatus may include one or more radiation sources 110, one or more backscatter detectors 120, electronics 160, and an electronic device 130.

Exemplarily, the radiation source 110 is configured to emit a radiation ray to scan the target object 140. The backscatter detector 120 and the radiation source 110 are located on the same side of the target object 140, and the backscatter detector 120 is configured to receive the radiation ray reflected by the target object 140.

For example, the radiation source 110 may include an X-ray source that may emit X-rays to scan the target object 140. The backscatter detector 120 may use its sensitive volume to convert X-rays reflected by the target object 140 into photons, and then convert the photons into pulsed electrical signals using a photoelectric converter 122 packaged therein. The target object 140 may include objects such as a vehicle, a container, a suitcase, or other items in a security inspection scenario, or various materials in a material analysis scenario. The target object 140 may also include a human body, such as a person passing through a security aisle in a station, an airport, or other public places. In some embodiments, the radiation source 110 may also include a gamma ray source or other ray sources in which Compton scattering phenomena may occur.

For example, the electronics 160 may include a device such as an amplifier for amplifying the pulsed electrical signal output by the backscatter detector 120. The electronic device 130 may include one or more processors and a memory for storing one or more programs, where the one or more programs, when executed by the one or more processors, cause the one or more processors to perform data processing of the electronic signals. The radiation source 110, the backscatter detector 120, and the electronics 160 may be communicatively connected to the electronic device 130 through the network 150 to transmit data. The network 150 may include various connection types, such as wired, wireless communication links, or fiber optic cables, and the like. The backscatter detector 120 and the electronics 160 may be communicatively connected to transmit pulsed electrical signals.

Exemplarily, a backscatter detection process for the target object 140 in the related art is illustrated with reference to FIG. 1.

First, the radiation source 110 includes an X-ray source and a flying spot forming mechanism (not shown in the figure). The X-ray source emits X-rays, a flying spot is formed under modulation of the flying spot forming mechanism, and a flying spot scan is performed on the target object 140.

The backscattered ray signal (such as a ray event sequence incident on the backscatter detector 120 shown in FIG. 2) with a certain energy distribution and time interval distribution scattered by the target object 140 is then incident within a sensitive volume 121 of the backscatter detector 120. The sensitive volume 121 of the backscatter detector 120 refers to a region in the detector capable of interacting with incident radiation particles and generating a photonic signal, and the region may include a radiosensitive medium.

The horizontal axis of FIG. 2 is the time axis, $t_{21}$, $t_{22}$ ... $t_{29}$ represent the scale on the horizontal axis, and the time unit may be characterized by nanoseconds (ns), microseconds ($\mu$s), milliseconds (ms), seconds (s), or the like. The vertical axis of FIG. 2 is the energy axis, $e_{21}$, $e_{22}$ ... $e_{28}$ represent the scale on the vertical axis, and the energy unit may use joules, volts, or the like. Each vertical line in FIG. 2 corresponds to a ray case. The horizontal axis coordinate at the bottom of the vertical line is the incident time point, and the vertical axis coordinate at the top of the vertical line is the ray energy.

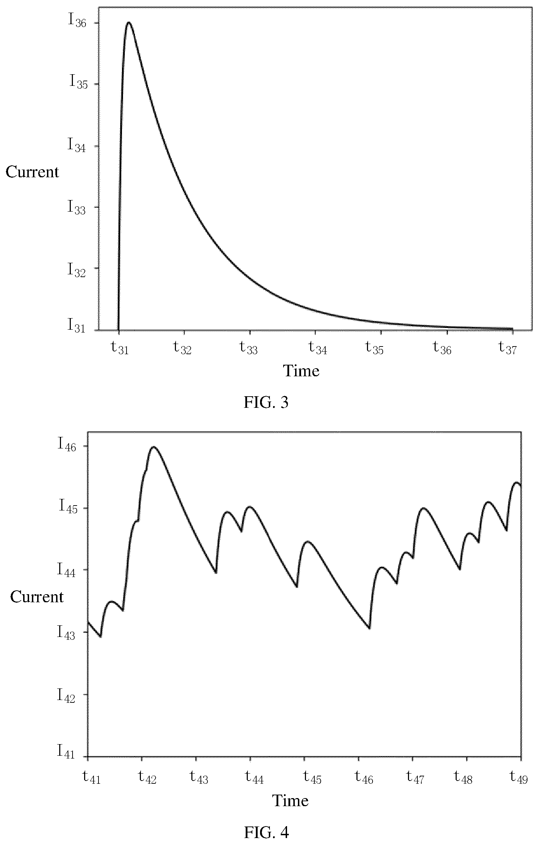

Next, the sensitive volume 121 of the backscatter detector 120 absorbs the rays through the radiosensitive medium and converts them into a large number of photons (in ultraviolet-visible light range), resulting in a schematic diagram of the number of photons excited by a single ray (e.g., 1 ray case) changing over time according to an embodiment of the present disclosure as shown in FIG. 3.

The horizontal axis of FIG. 3 is the time axis, $t_{31}$, $t_{32}$ ... $t_{37}$ represent the scale on the horizontal axis, and the time unit may be characterized by nanoseconds (ns), microseconds ($\mu$s), milliseconds (ms), seconds (s), or the like. The vertical axis of FIG. 3 is the signal axis, $I_{31}$, $I_{32}$ ... $I_{36}$ represent the scale on the vertical axis, and its amplitude unit may be expressed by current, such as amps (A), or by voltage, such as volts (V). The signal decay portion shown in FIG. 3 approaches exponential decay.

Then, with the photoelectric converter 122 of the backscatter detector 120, the photon stream is converted into an electronic signal, the response time of the photoelectric converter 122 may be faster than the time of the photon pulse, and the pulsed electrical signal corresponding to a single ray it converts is also similar to that shown in FIG. 3.

When the ray intensity (e.g., ray count rate) is high, the electrical signals generated from a series of ray cases will be piled-up and superposed together, and a continuous pulse waveform is formed using the photoelectric converter 122, for example, the pulsed electrical signal with signal pile-up and superposition in the related art is shown in FIG. 4. FIG. 4 shows the pulsed electrical signal output by the backscatter detector 120 when a large number of rays are incident, which is a result of convolution of the plurality of ray cases in FIG. 2 and the response waveforms of each case in FIG. 3.

The horizontal axis of FIG. 4 is the time axis, $t_{41}$, $t_{42}$ ... $t_{49}$ represent the scale on the horizontal axis, and the time unit may be characterized by nanoseconds (ns), microseconds ($\mu$s), milliseconds (ms), seconds (s), or the like. The vertical axis of FIG. 4 is the signal axis, $I_{41}$, $I_{42}$ ... $I_{46}$ represent the scale on the vertical axis, and its amplitude unit may be expressed by current, such as amps (A), or by voltage, such as volts (V).

Then, after the electrical signal (such as the pulsed electrical signal shown in FIG. 4) output by the backscatter detector 120 passes through the amplifier, the pulsed electrical signal output by the amplifier may be sampled by the ADC, and the corresponding digital signal sequence may be generated after sampling and transmitted to the electronic device 130 for processing.

In the related art, the sampling value of the ADC contains the contribution of a plurality of ray signals, and the information of a single ray signal is lost, so that accurate information of different ray conditions may not be obtained, and different rays with the same ray condition may not be accurately identified. The inventors find that at least one of the reasons is that the detection region area (i.e., the detection area of the sensitive volume) corresponding to a single ray transmission channel (such as a photoelectric converter channel) of the backscatter detector is too large. For example, an excessively large detection region area corresponds to a single photoelectric converter, and the single ray transmission channel may lead to an excessively high count rate of the processed ray signal. Moreover, the pulsed electrical signal has a certain width, and under the condition of high count rate, a large number of signals will be piled-up and superimposed (as shown in FIG. 4), making it impossible to distinguish the signal of a single ray.

For example, for rays under 2 different conditions: (1) energy of 10 keV (kiloelectron volts), count rate of 2 Mcps (million counts per second); and (2) energy of 20 keV, count rate of 1 Mcps. The intensity of photon stream generated after the signal pile-up under the two ray conditions is the same, thus the results obtained after ADC sampling are also the same, making it impossible to distinguish and obtain accurate information of rays under different conditions.

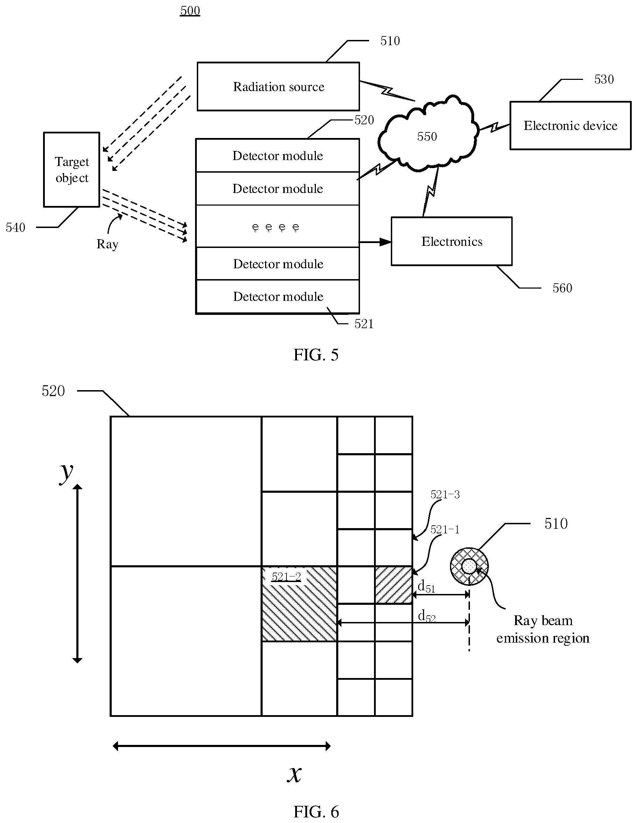

In view of the problem that information of a single ray signal is lost due to the pile-up and superposition of a large number of signals as described above, the present disclosure provides a backscatter detection apparatus as shown in FIG. 5, which may perform data processing based on an integration-based (also called current-type) detection principle or may perform data processing based on a counting-based (also called pulse-type) detection principle.

FIG. 5 schematically shows an application scenario diagram of a backscatter detection apparatus according to an embodiment of the present disclosure. FIG. 6 shows a schematic layout diagram of a radiation source and a backscatter detector according to an embodiment of the present disclosure.

As shown in FIG. 5 and FIG. 6, an application scenario 500 according to the embodiment may include a backscatter detection apparatus and a target object 540. The backscatter detection apparatus may include one or more radiation sources 510, one or more backscatter detectors 520, electronics 560, and an electronic device 530.

In some embodiments, the radiation source 510 is configured to emit a radiation ray to scan the target object 540. At least one backscatter detector 520 is distributed on at least one side (e.g., at least one of the left side and the right side) of the radiation source 510, each of which is configured to detect a radiation ray signal including a signal detected after the target object 540 is scanned by the radiation ray. For example, at least one backscatter detector 520 and the radiation source 510 are located on the same side of the target object 540, and the backscatter detector 520 is configured to receive the radiation ray reflected by the target object 540. The backscatter detector 520 includes a plurality of detector modules 521 arranged at different positions and having the ray signal channels independent of each other. The ray signal channel includes a channel for transmitting the detected radiation ray signal. At least two first detection modules have different detection region areas, and the respective detection region area is adapted to the respective target first count rate.

Exemplarily, the radiation source 510, the electronic device 530, the target object 540, and the network 550 of the embodiment may refer to the radiation source 510, the electronic device 530, the target object 540, and the network 550 in FIG. 1 described above, and will not be described in detail herein.

For example, the backscatter detector 520 may be a counting-type detector or an integration-type detector. Each detector module 521 may receive X-rays reflected by the target object 540, convert them into a photon stream, and then output pulsed electrical signals to the electronics 560 via a corresponding ray signal channel. The plurality of detector modules 521 may be regularly distributed at different positions to form a detector array, such as a single-row array or a multi-row array, or the plurality of detector modules 521 may be irregularly distributed at different positions. The above-mentioned different positions may be located on the same plane or may be located on different planes, for example distributed on the same curved surface.

Each detector module 521 includes a radiosensitive medium and a photoelectric conversion device encapsulated in a light-tight mechanical housing. Each detector module 521 receives X-rays reflected by the target object 540 with its detection region. The detection region may include a region formed using the radiosensitive medium. Specifically, the X-rays interact with the radiosensitive medium to generate a number of photon streams with a specific decay time. The photon streams are absorbed by the photoelectric converter through a collection cavity and generate a pulsed electrical signal. The collection cavity may be achieved by light guide, direct coupling of optical glue, etc.

The photoelectric conversion device may have a signal amplification function (amplifying one electron to several thousand to several million electrons) to improve a signal-to-noise ratio. For example, the photoelectric conversion device may be SiPM (silicon photomultiplier tube). The size of the sensitive region of SiPM is generally 4 mm × 4 mm to 6 mm × 6 mm to ensure sufficient light collection efficiency. The number of microcells is generally no less than 3000 to ensure that the number of photons generated by higher-energy rays (about 200keV) is within the linear response range of SiPM. The photoelectric conversion device may also be a photomultiplier tube (PMT), an avalanche photodiode (APD), a hybrid photomultiplier tube (HPMT), or the like.

The backscatter detector 520 includes a plurality of ray signal channels corresponding one-to-one to the plurality of detector modules 521, and each ray signal channel may separately detect and record ray events, and transmit the photonic signal and the pulsed electrical signal. Each ray signal channel corresponds to an independent signal transmission channel, which may process incident rays. For example, each detector module 521 has its own independent detection region and photoelectric conversion device.

For example, the count rate refers to the number of rays recorded per unit time. The detection region area of the detector module 521 indicates the size of the detection region. The larger the detection region area, the higher the count rate of the radiation rays received as a whole, and vice versa.

The target first count rate is used to indicate the theoretical maximum ray count that a detector module 521 may record per unit time. The target first count rate may be predetermined for each detector module 521, the detection region areas of the detector modules 521 may be the same or different, and the target first count rates of the detector modules 521 may also be the same or different. Any two modules having different detection region areas among the plurality of detector modules 521 may be referred to as the first detector modules 521.

The fact that the detection region area of the first detector module 521 is adapted to the target first count rate means that the detection region area of the detector module 521 may meet the requirement of its designed target first count rate, for example, the maximum number of rays that may actually be recorded per unit time does not exceed the target first count rate.

According to an embodiment of the present disclosure, the plurality of detector modules 521 are distributed at different positions, their ray signal channels are independent of each other, and the entire detection region of the backscatter detector 520 may be divided into a plurality of independent detection regions. At least two first detection modules have different detection region areas, and the respective target first count rate is adapted by combining each first detection module's own detection region area and ray signal channel. Therefore, the detection region area corresponding to each ray signal channel is appropriate, so that the ray signal of the ray count rate within the target range may be received and processed, and the problem of signal pile-up caused by excessively high ray count rate may be effectively overcome, thereby obtaining accurate information of a single ray.

Furthermore, at least two first detection modules have different detection region areas, which may reduce the total number of ray signal channels of the backscatter detector 520, and lower the cost and power consumption of the photoelectric conversion device and electronics.

In some embodiments, the detection region area of each first detection module is positively correlated with its distance to the ray beam, and the ray beam includes the radiation rays emitted by the radiation source 510 toward the target object 540.

For example, at a position close to the X-ray beam emitted by the radiation source 510, the ray count rate is high and changes significantly with the spatial position, and the first detection module at this position may use a smaller detection region area to reduce the count rate of a single module and reduce the signal pile-up. At a position far away from the X-ray beam emitted by the radiation source 510, the ray count rate is low and changes insignificantly with the spatial position, and the first detection module at this position may use a larger detection region area.

Each rectangle in FIG. 6 corresponds to the detection region of the detector module 521, and the radiation source 510 emits radiation rays from the ray beam emission region. The detector module 521-1 and the detector module 521-2 filled with different patterns in FIG. 6 are both referred to as the first detection modules, and the distance between the detector module 521-1 and the ray beam in the first direction is $d_{51}$, and the distance between the detector module 521-2 and the ray beam in the first direction is $d_{52}$ greater than $d_{51}$. The detection region area of the detector module 521-1 is less than the detection region area of the detector module 521-2.

The distance to the ray beam in the first direction involved in the present disclosure is a distance from the right edge of the detection region in the first direction to an extension line of the ray beam emission region, and the extension line refers to a center line of the ray beam emission region extended in the second direction. Alternatively, $d_{51}$ and $d_{52}$ may also be the straight line distances between the centers of the detection regions of the detector module 521-1 and the detector module 521-2 to the center of the ray beam emission region respectively.

According to the embodiments of the present disclosure, the detection region area of each first detection module may be reasonably determined by considering the distance between the detector module 521 and the ray beam, so as to better adapt the respective target first count rate.

In some embodiments, the plurality of detection modules further include at least two second detection modules. The at least two second detection modules have the same detection region area, and their respective distances to the ray beam in the first direction are less than or equal to a target threshold.

For example, in different regions of the X-ray beam emitted by the radiation source 510, the ray count rates are inconsistent. A plurality of detector modules 521 having the same detection region area may be provided in the same region, and a plurality of detector modules 521 having different detection region areas may be provided in different regions. Any two detector modules 521 having the same detection region area may be referred to as the second detection modules. It may be understood that the first detection module and the second detection module are to more clearly explain the similarities and differences in the detection region area, and any detection module may be referred to as either a first detection module or a second detection module.

As shown in FIG. 6, when viewed from right to left from the radiation source 510 in the present diagram, the detector module 521-1 and the detector module 521-3 in the first column are both referred to as the second detection modules. If the target threshold value may be $d_{51}$, the distances from the detector module 521-1 and the detector module 521-3 to the ray beam in the first direction are the same, both being $d_{51}$. Further, the detector modules 521 in each column have the same distance to the ray beam in the first direction, and the same target threshold may be set. Each column is regarded as a region, and the plurality of detector modules 521 therein may have the same detection region area.

According to the embodiments of the present disclosure, providing a plurality of second detection modules having the same detection region area may provide consistent detection performance and detection reliability when detecting radiation in the same region.

In some embodiments, the at least two first detection modules are distributed along a first direction, and the at least two second detection modules are distributed along a second direction (such as the y-direction in FIG. 6) intersecting the first direction.

As shown in FIG. 6, the detector module 521-1 and the detector module 521-2 are distributed in the first direction, and the detector module 521-1 and the detector module 521-3 are distributed in the second direction. The first direction is perpendicular to the second direction. Therefore, the detector modules may be arranged in a targeted manner taking into account different count rates near the ray beam.

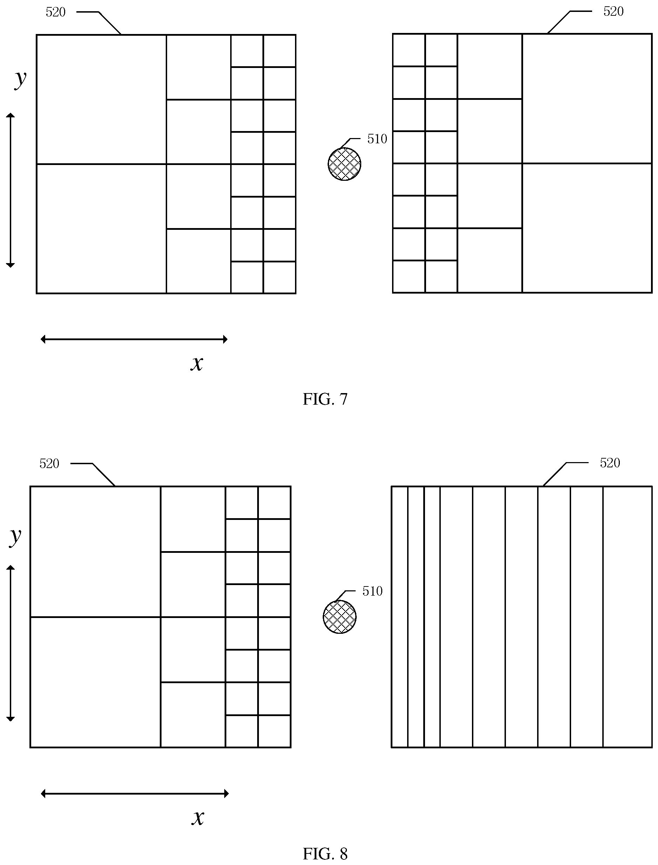

FIG. 7 schematically shows a schematic layout diagram of a radiation source 510 and a backscatter detector 520 according to another embodiment of the present disclosure.

In some embodiments, two backscatter detectors 520 with the identical structure may be disposed symmetrically on both sides (e.g., left and right sides) of the radiation source 510. As shown in FIG. 7, the two backscatter detectors 520 may have a symmetrical and identical detector module 521 structure, and the backscatter detector structure includes a detection region area of each of the plurality of detector modules. For example, the two detector modules 521 that are located at the same distance from the radiation source 510 and located on the left and right sides may have the same detection region area.

According to the embodiments of the present disclosure, by symmetrically arranging the same two backscatter detectors 520 on both sides of the radiation source 510, richer backscattering data may be detected, and the detection accuracy may be improved.

FIG. 8 schematically shows a schematic layout diagram of a radiation source 510 and a backscatter detector 520 according to yet another embodiment of the present disclosure. Each rectangle in FIG. 8 may correspond to the detection region of the detector module 521.

In some embodiments, the backscatter detectors 520 may be disposed on two or more sides of the radiation source 510. The distances between the backscatter detectors 520 on any two sides and the radiation source 510 may be the same or different, and the structures of the detector modules 521 of the backscatter detectors 520 on any two sides may be the same or different. The distance between the backscatter detector 520 on each side and the radiation source 510 and the structure of the detector module 521 may be determined according to the specific region on the detected target object 540. For example, different regions on the target object 540 have different structures and materials, and the Compton scattering distribution is also different, thus the structure of the corresponding backscatter detector 520 may be determined according to the characteristics of each region.

As shown in FIG. 8, two backscatter detectors 520 are provided on both sides of the radiation source 510. The detector modules 521 of the two backscatter detectors 520 have different structures, and each detects radiation ray signals corresponding to different regions of the target object. For example, the number and arrangement of the plurality of detector modules 521 are different, and the detection region shapes, detection region sizes, and detection region areas of the detector modules 521 are not completely consistent.

According to the embodiments of the present disclosure, the backscatter detector 520 on each side may detect a specific region on the target object 540, and the detection accuracy may be improved.

In some embodiments, the detection region area of at least one detector module 521 in the plurality of detector modules 521 of the backscatter detector 520 is adjustable. For example, the detection region area of the first detector module 521, the second detector module 521, or other detector modules 521 is adjustable. For example, each detector module 521 is provided with a retractable shielding window by mechanical adjustment. The material of the shielding window may shield rays, and the size of the detection region in which each detector module 521 may receive radiation ray signals is adjusted by changing the size of the window.

According to the embodiments of the present disclosure, the adjustability of the detection region area enables the detector module 521 to adapt to different target objects 540, different count rates, different positions, and the like, and has higher flexibility.

In some embodiments, the detection region area of each of the at least one detector module 521 is adjusted according to the difference between the detected actual count rate and the target first count rate.

For example, if the actual count rate is lower than the target first count rate by a certain value, for example, the difference is more than 20%, the count rate may be increased by increasing the detection region area, and vice versa, the detection region area may be reduced to avoid stacking. This may improve the accuracy and efficiency of the detected data. The detection region area changes within a certain range, in which case a constant target first count rate may be maintained.

In some embodiments, as shown in FIG. 8, two backscatter detectors 520 are distributed on both sides of the radiation source 510, and the structure of each backscatter detector 520 is determined according to the region of the detected target object 540.

For example, if the region of the target object 540 on one side experiences more Compton scattering, resulting in a higher count rate on this side, the detection region area of the detector module 521 corresponding to the detector detecting this side may be adjusted to be smaller. On the contrary, if there is less Compton scattering in the region on the other side, resulting in a lower count rate, the detection region area of the detector module 521 corresponding to the detector detecting this side may be increased. Thus, the detection requirements of different positions may be more effectively adapted.

It should be noted that in the embodiments of the present disclosure, the arrangement of the plurality of detector modules 521 in the backscatter detector 520 and the shape and detection region area of each detector module 521 are not limited to those shown in FIG. 6, FIG. 7, and FIG. 8, and may be flexibly adjusted within the scope of the inventive concept of the present disclosure.

In some embodiments, the detection region area of each detector module 521 is predetermined according to its target second count rate per unit area and target pulse width of a single ray signal.

The target second count rate is used to indicate the maximum ray count recorded per unit time in per unit area of the detection region. Unlike the target second count rate, the target first count rate is the maximum ray count recorded per unit time in the entire detection region. For example, the unit area is per square centimeter and the unit time is 1 second, which is just an example.

A single ray signal is obtained by a single ray case, such as the pulse waveform shown in FIG. 3. The target pulse width is used to indicate the pulse width of the pulse waveform of a single ray signal when no signal stacking occurs. Different detector modules 521 may have the same or different target second count rates.

It may be understood that the ray count recorded per unit time in per unit area of the detection region affects the ray count of the entire detection region, and the pulse width of a single ray signal affects whether the pulse waveforms of a plurality of ray signals are stacked.

According to the embodiments of the present disclosure, a suitable detection region area may be determined according to the target second count rate per unit area and the target pulse width of a single ray signal to effectively prevent signal pile-up and superposition.

The decay time and afterglow effect of the radiosensitive medium affect the pulse width of a single ray signal. For example, some related technical solutions use materials with long decay time such as CsI, GOS, BaFCl, etc. as the radiosensitive medium, which leads to a large signal pulse width (as shown in FIG. 3), and is also easy to produce signal pile-up and superposition. In addition, materials such as CsI have obvious afterglow effect, that is, the previously incident ray signals will continue to generate photon signals, thereby affecting the discrimination of the subsequently incident ray signals.

In some embodiments, the detection region of each detector module 521 includes a radiosensitive medium configured to interact with radiation rays reflected by the target object 540 to generate ray photons, where the decay time of the ray photons is less than or equal to a first target time, and/or the duration of the afterglow effect is less than or equal to a second target time.

Upon receiving ray irradiation, as shown in FIG. 3, photons generated by the radiosensitive medium will decay in two steps. The first step is a rapid decay from the peak output to a lower value. This process is called decay. The decay gradient at this value has substantially transitioned to a lower decay rate. The second step continues decay at this lower decay rate. This low-intensity decay is generally a long-term decay, and the decaying luminescence at this time is called afterglow. For example, it may be defined as being lower than 1% to 2% of the peak (for example only). For example, the initial rapid decay time is referred to as the decay time, e.g. the time of decay from the peak to the $1/e$ of the peak. The natural constant $e$ is the base of the natural logarithm. The duration of the afterglow effect in the embodiments of the present disclosure may be calculated from the time of decay from the peak to 1000 ppm (0.1% to 0.2%).

Exemplarily, the first target time and the second target time are used to constrain the plurality of ray signals from signal pile-up and superposition. For example, by testing materials of a variety of radiosensitive media, materials with short decay time and small afterglow effect may be selected to test and evaluate whether the plurality of ray signals may be restrained from signal pile-up and superposition. For example, the first target time may be 200 nanoseconds, and the second target time may be 10 milliseconds, which are only examples.

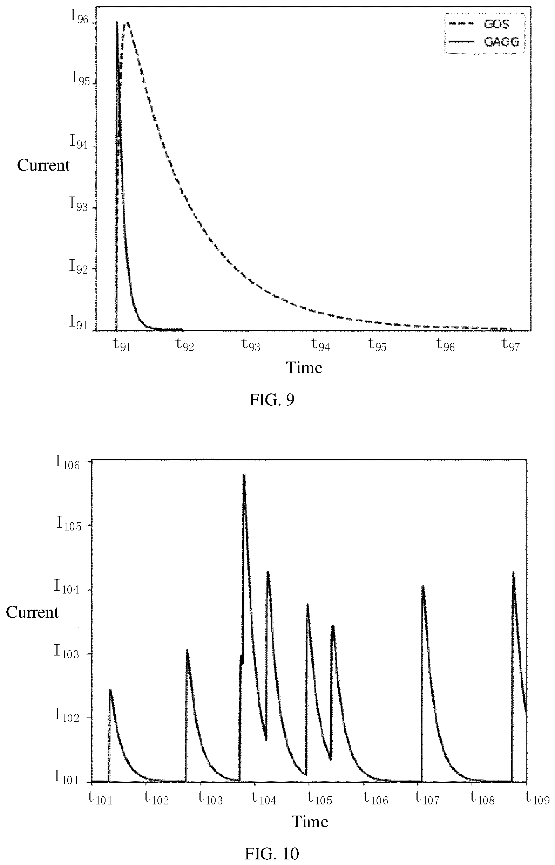

FIG. 9 schematically shows a schematic diagram comparing response pulse waveforms of a fast-decay crystal (GAGG) and a slow-decay crystal (GOS) according to an embodiment of the present disclosure.

The horizontal axis of FIG. 9 is the time axis, $t_{91}$, $t_{92}$ ... $t_{97}$ represent the scale on the horizontal axis, and the time unit may be characterized by nanoseconds (ns), microseconds ($\mu$s), milliseconds (ms), seconds (s), or the like. The vertical axis of FIG. 9 is the signal axis, $I_{91}$, $I_{92}$ ... $I_{96}$ represent the scale on the vertical axis, and its amplitude unit may be expressed by current, such as amps (A), or by voltage, such as volts (V). GAGG is gadolinium aluminum gallium garnet, and GOS is gadolinium oxysulfide crystal.

As shown in FIG. 9, the response pulse waveform of GAGG has a shorter decay time and a smaller afterglow effect than the response pulse waveform of GOS, and according to the defined first target time and second target time, the plurality of ray signals may be constrained from signal pile-up and superposition. Therefore, GAGG may be selected as the material of the radiosensitive medium.

It should be noted that, in some embodiments, fast-decay crystals such as BGO (bismuth germanate), LYSO (yttrium lutetium silicate), or plastic scintillators may also be selected as materials of the radiosensitive medium, and the present disclosure is not limited to this.

In some embodiments, the target second count rate per unit area of each detector module 521 is predetermined according to its relative position to the ray beam. The target second count rate is predetermined, for example, according to the distance to the ray beam and the position at a different direction of the ray beam.

In some embodiments, the target second count rate per unit area of each detector module 521 is negatively correlated with its distance to the ray beam in the first direction.

For example, at a position close to the X-ray beam emitted by the radiation source 510, the ray count rate is high, and the target second count rate per unit area of the detector module 521 at this position may be high. At a position far away from the X-ray beam emitted by the radiation source 510, the ray count rate is low, and the target second count rate per unit area of the detector module 521 at this location may be low. Referring to FIG. 7, the farther the detector module 521 is from the radiation source 510 in the first direction, the lower the target second count rate per unit area, and vice versa. Therefore, the set target second count rate distribution is consistent with the actual detection environment, and the detection accuracy is improved.

In some embodiments, the detection region area of each detector module 521 is predetermined according to its target second count rate per unit area and target pulse width of a single ray signal, including: multiplying the target second count rate per unit area of each detector module 521 by the target pulse width of a single ray signal to obtain a first numerical value; and determining the detection region area based on the reciprocal of the first numerical value.

The calculation process of the detection region area S is derived below.

The count rate (i.e. the target first count rate) of the single ray signal channel of each detector module 521 satisfies Formula 1:

$$r_{ch} \leq \frac{1}{w} \qquad \text{Formula 1}$$

Where $r_{ch}$ is the target first count rate, w is the target pulse width of a single ray signal, for example, w is the minimum pulse width allowed for no signal pile-up and superposition, and 1 represents 1 second.

The target first count rate is the product of the target second count rate $r_{unit}$ per unit area and the detection region area S:

$$r_{ch} = r_{unit} \cdot S \qquad \text{Formula 2}$$

Combining Formula 1 and Formula 2, $r_{ch}$ is eliminated to obtain:

$$S \leq \frac{1}{r_{unit} \cdot w} \qquad \text{Formula 3}$$

Where $r_{unit} \cdot w$ is the first numerical value, and the detection region area S is less than or equal to the reciprocal of the first numerical value.

In some embodiments, determining the detection region area based on the reciprocal of the first numerical value includes multiplying the reciprocal of the first numerical value by a safety factor to determine the detection region area, where the safety factor has a value less than 1. The safety factor values of different detector modules 521 may be the same or different, so that the count rate of the detector module 521 may be adjusted in a targeted manner.

On the basis of Formula 3, the safety factor is introduced to obtain:

$$S \leq \frac{1}{k} \cdot \frac{1}{r_{unit} \cdot w} \qquad \text{Formula 4}$$

Where k is the safety weight and the reciprocal of k is the safety factor. For example, the value of k is greater than or equal to 2 and less than or equal to 10.

FIG. 10 schematically shows a schematic waveform diagram of a pulsed electrical signal output by a detector module according to an embodiment of the present disclosure.

The horizontal axis of FIG. 10 is the time axis, $t_{101}, t_{102} ... t_{109}$ represent the scale on the horizontal axis, and the time unit may be characterized by nanoseconds (ns), microseconds ($\mu$s), milliseconds (ms), seconds (s), or the like. The vertical axis of FIG. 10 is the signal axis, $I_{101}, I_{102} ... I_{106}$ represent the scale on the vertical axis, and its amplitude unit may be expressed by current, such as amps (A), or by voltage, such as volts (V).

Referring to Formula 4, for example, if the target second count rate $r_{unit}$ per unit area is 10 kcps/cm$^2$, and the target pulse width w of a single ray signal is 1 $\mu$s, then the detection region area S is 100 cm$^2$. As shown in FIG. 10, most of the pulse signals do not pile up.

According to the embodiments of the present disclosure, by introducing the safety factor, the size of the detection region area may be controlled, and the ray count rate of a single ray signal channel may be further controlled, so as to avoid signal pile-up and superposition.

When scanning one or more points of the target object, transmitted rays or scattered rays from the same scanning point are detected by a plurality of positions of the radiosensitive medium of the backscatter detector, and at present, only the result of summing the detection data of the respective positions is used as the radiation ray signal of the same scanning point. The radiation image is obtained on the basis of the radiation ray signal obtained based on the summing result, and then the radiation image is identified to obtain the material identification result.

The radiation ray signal is obtained based on the summing result of the detection data, and then the radiation image is obtained by processing the radiation ray signal, which loses some information, and is not conducive to improving the accuracy of material identification.

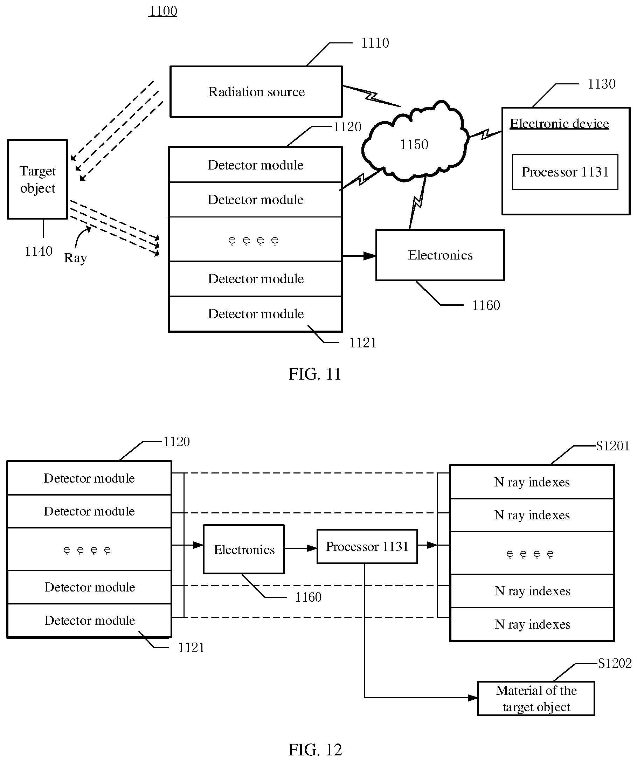

FIG. 11 schematically shows an application scenario diagram of an apparatus of identifying a material according to an embodiment of the present disclosure. FIG. 12 schematically shows a schematic diagram of data flow between a backscatter detector, electronics, and a processor according to an embodiment of the present disclosure.

It should be noted that in the embodiments of the apparatus of identifying a material or the method of identifying a material, the radiation detector including a plurality of detector modules may be used, and the radiation detector may be arranged on the same side of the target object as the radiation source to be used as a backscatter detector, or may be arranged on opposite sides of the target object with the radiation source to be used as a transmission detector. It will be appreciated that in the case where the radiation detector is used as the backscatter detector, the radiation detector may have a structure, size, detection parameters, etc. adapted to the backscattering scanning scene. When the radiation detector is used as the transmission detector, the radiation detector may have a structure, detection parameters, etc. adapted to the transmission scanning scene.

The following takes the radiation detector preferably as a backscatter detector as an example.

As shown in FIG. 11, an application scenario 1100 according to the embodiment may include a backscatter detection apparatus and a target object 1140. The backscatter detection apparatus may include one or more radiation sources 1110, one or more backscatter detectors 1120, electronics 1160, and an electronic device 1130.

Exemplarily, the radiation source 1110, the electronic device 1130, the target object 1140, and the network 1150 of the embodiment may refer to the radiation source 1110, the electronic device 1130, the target object 1140, and the network 1150 in FIG. 1 described above, and will not be described in detail herein.

In some embodiments, the backscatter detector 1120 may be the backscatter detector 520 as described above, and one or more embodiments of the backscatter detector 520 described above may be applied to the backscatter detector 1120. For example, at a position close to the X-ray beam emitted by the radiation source 510, the ray count rate is high and changes significantly with the spatial position, and the first detection module at this position may use a smaller detection region area. At a position far away from the X-ray beam emitted by the radiation source 510, the ray count rate is low and changes insignificantly with the spatial position, and the first detection module at this position may use a larger detection region area. It may be seen that while reducing the number of ray signal channels, accurate spatial distribution information of ray indexes may also be obtained.

In other embodiments, the backscatter detector 1120 is not limited to the backscatter detector 520 described above, for example, the backscatter detector 1120 may include a plurality of detector modules 1121 arranged at different positions, where the detection region areas of the detector modules 1121 may be the same or different, and the ray signal channels of the detector modules 1121 may be independent of each other or multiplexed. The embodiment does not impose specific limitations, as long as the position of each detector may be identified.

In some embodiments, the backscatter detector 1120 is configured to detect, in response to the radiation ray scanning the target object 1140, the radiation ray signal using a plurality of detector modules 1121, where the plurality of detector modules 1121 are arranged at different positions and the radiation signal channels are independent of each other.

Referring to FIG. 11 and FIG. 12, the processor 1131 is configured to perform operation S1201 to operation S1202. The dashed line in FIG. 12 is used to characterize the corresponding positional relationship.

In operation S1201, N ray indexes corresponding to the position of each detector module 1121 are calculated according to the radiation ray signal detected by each detector module 1121, and N is an integer greater than or equal to 1. In operation S1202, the material of the target object is identified according to the index values of each ray index at different positions.

The ray events in the backscatter scenario are random, and their energy and the time interval between the two events conform to a certain statistical distribution. When the same X-ray beam is incident on objects with different properties (material composition, areal density, etc.), the statistical distribution characteristics of the rays in the backscatter scenario will also change, which is reflected in the following three aspects:

(1) Quantity, lighter substances or substances with higher areal density have a higher probability of scattering. (2) Energy, the backscattering energy spectrum distributions of different materials are different, and they are related to the areal density. (3) Angular distribution, backscattering in different directions has different quantities and energy distributions.

The basic principle of backscatter detection technology is to use the backscatter detector to measure the values and changes of the above three statistical characteristics or their combination, and infer the material information and changes of the target object. The signal characteristics corresponding to the above three statistical characteristics in the detector are:

(1) Count rate, which reflects the number of backscattered rays. (2) Pulse height, which reflects the backscattered ray energy. (3) Detector spatial position, which reflects the angular distribution information of backscattering.

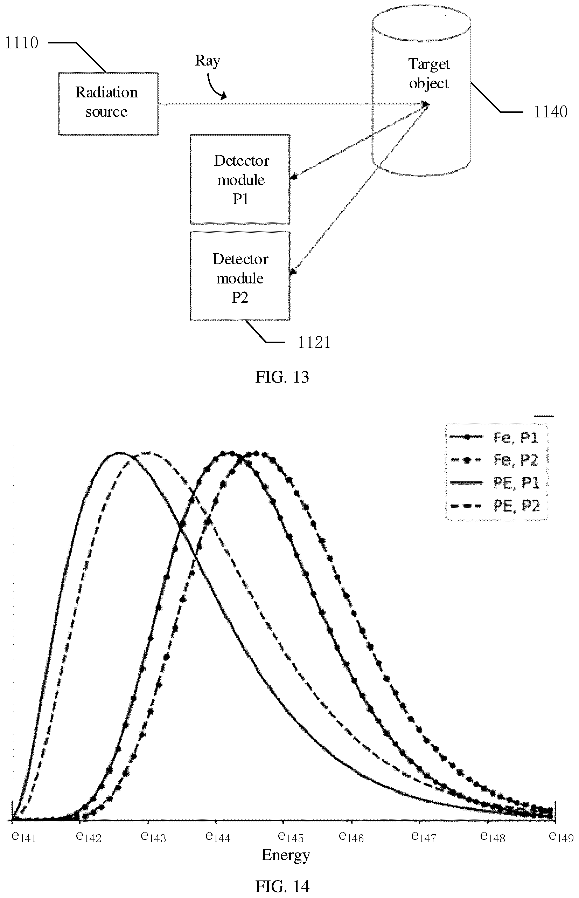

FIG. 13 schematically shows a schematic diagram of backscatter detection of detector modules at different positions according to an embodiment of the present disclosure.

Referring to FIG. 13, for example, the statistical characteristics of backscattering generated by two common measured objects, iron plate (hereinafter referred to as Fe, having a thickness of 5 mm and representing heavy substances such as metal) and polyethylene block (hereinafter referred to as PE, having a thickness of 10 cm and representing light substances such as plastic) when irradiated by a 200kVp X-ray machine are compared. The detector module 1121 may include a detector module P1 and a detector module P2. In FIG. 13, the detector module P1 represents the detector pixel close to the X-ray beam, and the detector module P2 represents the detector pixel farther away from the X-ray beam.

FIG. 14 schematically shows energy spectra of backscatters from different materials at different positions after peak normalization. The horizontal axis of FIG. 14 is the energy axis, $e_{141}$, $e_{142}$ ... $e_{149}$ represent the scale on the horizontal axis, and keV may be used as the energy unit.

Referring to FIG. 14, for energy information, the energy spectrum peak of Fe is tens of keV higher than the energy spectrum peak of PE; for the energy spectra at different positions, the energy spectrum peak at the detector module P2 (far from the X-ray beam) is higher.

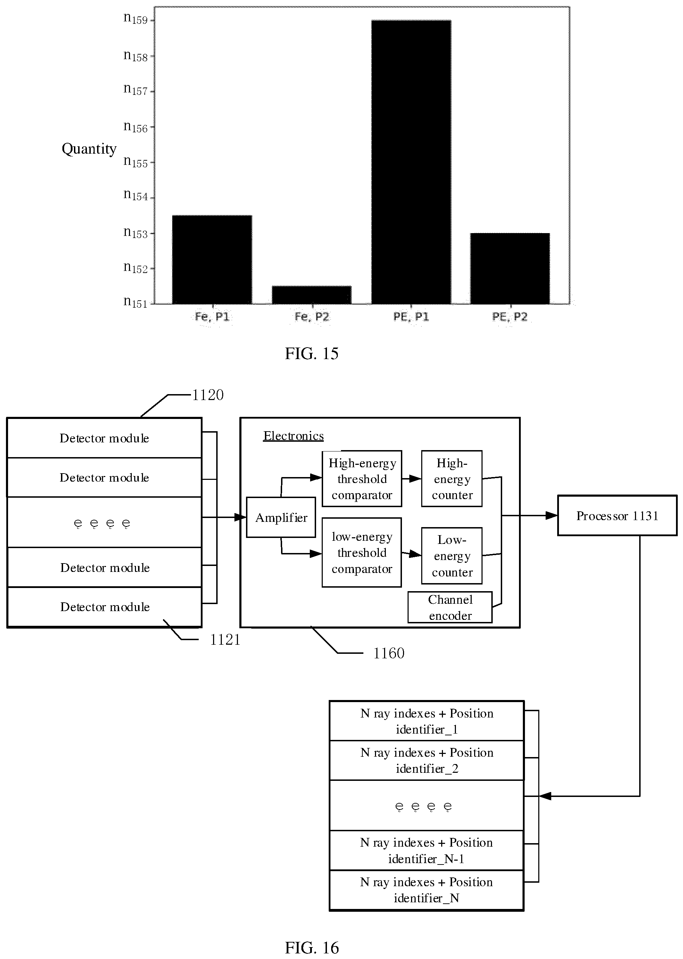

FIG. 15 schematically shows the relative ray quantities of backscatters from different materials at different positions. The vertical axis of FIG. 15 is the quantity axis, and $n_{151}$, $n_{152}$ ... $n_{159}$ represent the scale on the vertical axis.

Referring to FIG. 15, for the ray quantity information, the relative ray quantities of PE is greater than the relative ray quantities of Fe at the same detection position; for the relative ray quantities at different positions, the relative ray quantities at P1 (close to the X-ray beam) is more.

In combination with FIG. 11 to FIG.15, in operation S1201, the processor 1131 may calculate N ray indexes at the position of each detector module 1121 based on the count rate characteristics and the pulse height characteristics detected by each detector module 1121. In operation S1202, N ray indexes may be obtained at each position, so that the material of the target object 1140 may be identified by the spatial distribution of the indexes.

Therefore, material identification and better signal-to-noise ratio are achieved by improving the resolution of energy, count rate and position of rays.

According to the embodiments of the present disclosure, there are differences in the signals generated by the detector modules at different positions in the backscatter detector, and additional information may be obtained by comparing these differences. A plurality of detector modules 1121 distributed at different positions use their respective ray signal channels to receive the radiation rays reflected by the target object 1140. By receiving the radiation rays reflected by the target object 1140 through each detector module 1121, one or more ray indexes corresponding to each position may be independently calculated. By analyzing the spatial distribution difference of the index value of each ray index in different positions, the material of the target object 1140 may be accurately identified.

Compared with the method of using the backscatter image to identify a material, identifying a material through the spatial distribution difference of each ray index at different positions provides the identification method of different dimensions, which may be used as an effective supplement to backscatter image identification. When the spatial distribution of ray index is independently used to identify a material, high identification accuracy and efficiency may also be achieved.

FIG. 16 schematically shows a schematic diagram of data flow between a backscatter detector, electronics, and a processor according to another embodiment of the present disclosure.

As shown in FIG. 16, the electronics include an amplifier, a threshold comparator, a counter, and a channel encoder. In some embodiments, the threshold comparator is used to perform an energy threshold determination on a plurality of groups of ray signals to screen out ray signals in different energy ranges from each group of ray signals, where each group of ray signals is obtained according to the radiation rays received by the corresponding detector module 1121. The counter is communicatively connected to the processor 1131, and the counter is used to acquire the number of ray signals in different energy ranges in each group of ray signals.

It will be appreciated that different energy ranges refer to a plurality of energy ranges, and the threshold comparator is used to screen out complete or partial ray signals from these energy ranges. When partial ray signals are screened, it is meant that the remaining part in each group of ray signals that is not selected do not fall within any energy range set by the threshold comparator.

In general, the pulsed electric signal directly output by the photoelectric conversion device is difficult to be directly transmitted to the processor 1131 at the remote end for further processing. Therefore, in the vicinity of the output end of the photoelectric conversion device, the signal is amplified by the amplifier and then transmitted to the processor 1131 at the remote end, thereby improving the signal-to-noise ratio after transmission. The signal decay time designed by the amplifier may be slightly less than or equivalent to the decay time of the radiosensitive medium (such as 200 ns to 1 $\mu$s). This is because too small decay time will cause insufficient signal-to-noise ratio of the amplified signal, while too large decay time will cause serious signal pile-up beyond the normal working range of the subsequent signal processing circuit.

The threshold comparator is used to receive the pulsed electrical signal amplified by the amplifier. The energy of the signal is determined by the threshold comparator and the corresponding trigger signal is generated, and the counter records the number of trigger signals per unit time, so that the energy and count rate information of the rays are obtained, and the information is combined with the channel code containing the position information, packaged and transmitted to the processor 1131 for data analysis.

Referring to FIG. 16, the threshold comparator may include a high-energy threshold comparator and a low-energy threshold comparator which are respectively connected to a high-energy counter and a low-energy counter. The function of threshold comparison is to achieve pulse energy discrimination, that is, to screen out ray signals in different energy ranges.

In the related art, the signal output by the photoelectric conversion device of the detector is a piled-up signal, and the amplitude of the signal is generally directly sampled by an ADC (analog-to-digital converter). This method is simple and mature, but the relative fluctuation of amplitude is large when the count rate is low and the ray energy is low, which leads to poor signal-to-noise ratio.

In the embodiment, for example, two energy ranges may be set for an X-ray machine of about 200 kVp. The high-energy threshold comparator screens out the ray signals in the high-energy range, and the low-energy threshold comparator screens out the ray signals in the low-energy range. The low-energy range is used to eliminate background signals and interference signals caused by noise of the photoelectric conversion device to improve the signal-to-noise ratio, and may be set, for example, as a range of 5 keV to 10 keV (corresponding voltage level). The high-energy range is used to screen out the signals of high-energy rays, and may be set as a range of 70 keV to 100 keV.

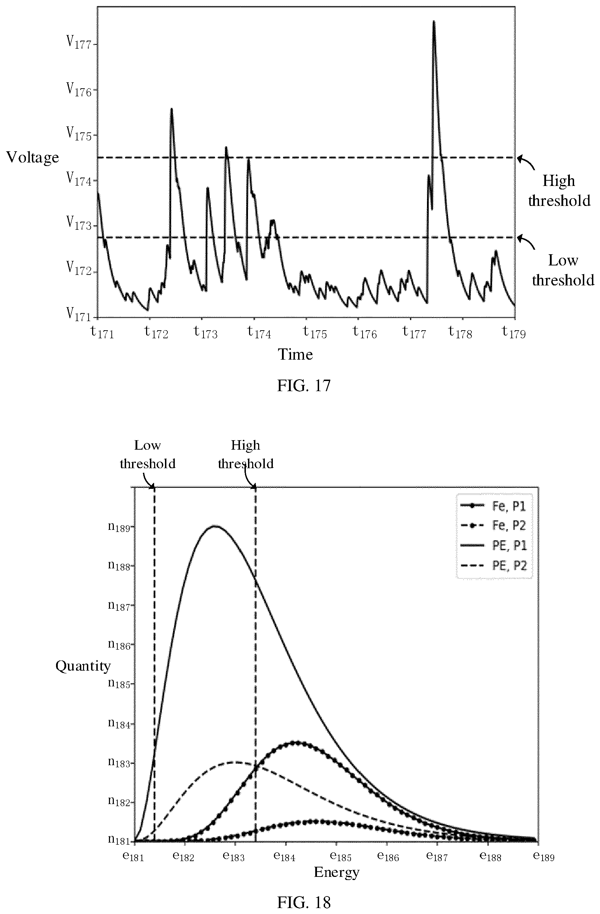

When a ray signal passes through the threshold comparator, a specific form of waveform is generated as a trigger signal for counting. FIG. 17 schematically shows a schematic waveform diagram of a group of ray signals containing noise, and shows a plurality of low-energy ray cases and a plurality of high-energy ray cases in the signal waveform.

The horizontal axis of FIG. 17 is the time axis, $t_{171}, t_{172} ... t_{179}$ represent the scale on the horizontal axis, and the time unit may be characterized by nanoseconds (ns), microseconds ($\mu$s), milliseconds (ms), seconds (s), or the like. The vertical axis of FIG. 17 is the signal axis, $V_{171}, V_{172} ... V_{177}$ represent the scale on the vertical axis, and its amplitude unit may be expressed by voltage, such as volts (V), or by current, such as amps (A). The two horizontal dashed lines in FIG. 17 are the low threshold value and the high threshold value respectively, which are used to divide the low-energy range and the high-energy range. For example, 5 keV is the low threshold and 70 keV is the high threshold.

FIG. 18 schematically shows energy spectra of backscatters from different materials at different positions. The pulse waveform shown in FIG. 18 is not normalized and contains both energy spectrum and count rate information. As shown in FIG. 18, selecting an appropriate energy range may distinguish high and low-energy components in the energy spectra of Fe and PE.

The horizontal axis of FIG. 18 is the energy axis, $e_{181}, e_{182} ... e_{189}$ represent the scale on the horizontal axis, and the energy unit may be joules, volts, or the like. The vertical axis of FIG. 18 is the quantity axis, and $n_{181}, n_{182} ... n_{189}$ represent the scale on the vertical axis. The two vertical dotted lines in FIG. 18 are the low threshold and the high threshold, respectively.

It should be noted that the threshold comparator is not limited to the high-energy threshold comparator and the low-energy threshold comparator, and one or more threshold comparators may be provided. Similarly, one or more counters may also be provided.

Exemplarily, referring to FIG. 16, the electronics may further include at least one of a low-pass filter, a shaping amplifier, and a time discriminator. For example, the low-pass filter (e.g. with a bandwidth of 10 MHz to 100 MHz) is added before the high-energy threshold comparator and the low-energy threshold comparator to suppress interference signals and single photon or crosstalk signals. Adding the shaping amplifier before the high-energy threshold comparator and the low-energy threshold comparator may reduce the pulse width, thereby increasing the upper limit of the count rate. A retention time discriminator is added between each pair of threshold comparators and counters, that is, only the signal that passes through the threshold comparator and is retained for more than a certain period of time may be sent to the counter, so as to eliminate false cases caused by fluctuations in the signal decay process.

In some embodiments, the processor 1131 is further configured to assign a corresponding location identifier according to the position of each detector module 1121, where N ray indexes corresponding to the position of each detector module 1121 are bound to the position identifier of the detector module 1121, and for example, the binding operation is performed by the processor 1131.

Exemplarily, the channel encoder is used to generate a channel code unique to each detector module 1121, which may map the position of the detector module 1121, i.e. spatial distribution information of the rays. The processor 1131 may assign a corresponding position identifier based on the channel code of each detector module 1121, and as shown in FIG. 18, each of position identifier_1, position identifier_2 ... position identifier_N-1, and position identifier_N has a corresponding detector module 1121.

For example, the channel encoder may include a multi-channel data acquisition card. The multi-channel data acquisition card may be used to collect signals of multiple channels simultaneously, the front end of each channel is connected to the photoelectric converter of each detector module 1121, and the back end of each channel is connected to the amplifier to form the ray signal channel of each detector module 1121 to transmit pulsed electrical signals.

According to the embodiments of the present disclosure, binding the position identifier to the ray index of each position may help track and correlate the output data of the detector module 1121, facilitate accurate acquisition of the spatial distribution of the ray index, and facilitate material identification based on the spatial distribution of the ray index.

In some embodiments, calculating N ray indexes corresponding to the position of each detector module 1121 in operation S1201 includes: acquiring, for each group of ray signals, target number of ray signals in a target energy range among the different energy ranges; calculating a ratio of the target number to the number of total ray signals to obtain the first ray index, where the number of total ray signals is obtained according to the sum of the numbers of all ray signals in different energy ranges.

For example, the target energy range is the high-energy range, and the number of total ray signals is the sum of the high-energy count (i.e., the target number) of the high-energy range and the low-energy count of the low-energy range. The first ray index may be the proportion of the high-energy count, as shown in Formula 5 below:

$$ ER = \frac{N_{HE}}{N_{LE}+N_{HE}} \qquad \text{Formula 5} $$

Where NLE is the low-energy count (corresponding to the area of the middle part of the two dotted lines in FIG. 18), NHE is the high-energy count (corresponding to the area of the right part of the right dotted line in FIG. 18), and ER is the proportion of the high-energy count. Then high ER means that there are more high-energy components in the energy spectrum (higher average energy of rays), otherwise there are more low-energy components (lower average energy of rays).

In some embodiments, calculating N ray indexes corresponding to the position of each detector module 1121 in operation S1201 includes: calculating, for each group of ray signals, a ratio of the number of total ray signals to a counting period of the counter to obtain a second ray index, where the number of total ray signals is obtained according to the sum of the numbers of all ray signals in different energy ranges, and the counting period includes a period of acquiring the number of ray signals.

The second ray index may be the ray count rate, as shown in Formula 6 below:

$$ CR = \frac{N_{LE}+N_{HE}}{T} \qquad \text{Formula 6} $$

Where CR represents the ray count rate, $N_{HE}$ is the high-energy count, $N_{LE}$ is the low-energy count, and T is the counting period of the counter. The number of total ray signals is the sum of high-energy counts and low-energy counts.

It should be noted that the energy range may be flexibly set according to the requirements, thus the calculation method of the first ray index and the second ray index is not limited to the above Formula 5 and Formula 6. Further, the N ray indexes of the present disclosure are not limited to the first ray index and the second ray index, and other ray indexes such as scattering angle, detection efficiency, decay coefficient, and the like may be included.

In some embodiments, identifying a material of the target object 1140 according to the index values of each ray index at different positions in operation S1202 includes: mapping the index values of each of the first ray index and the second ray index at different positions in a coordinate system, where a vertical axis of the coordinate system corresponds to the first ray index, and a horizontal axis of the coordinate system corresponds to the second ray index; and identifying the material of the target object 1140 according to a distribution of each of the first ray index and the second ray index in the coordinate system.

In some embodiments, the radiation source 1110 of the backscatter detection apparatus is configured to perform a flying spot scan on the target object 1140, where calculating N ray indexes corresponding to the position of each detector module 1121 includes: calculating, for each ray index, a plurality of index values corresponding to the position of each detector module 1121, where the plurality of index values correspond to a plurality of point positions of the flying spot scan one-to-one.

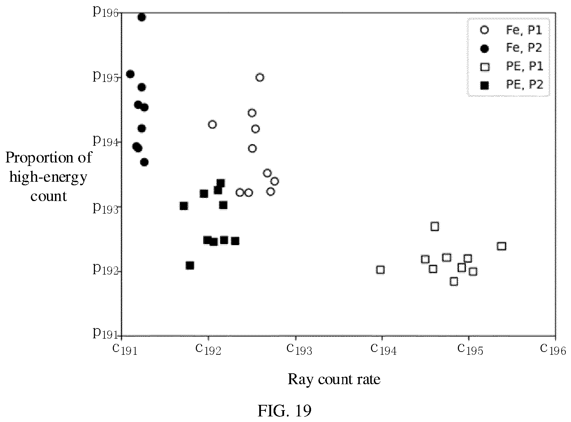

FIG. 19 schematically shows a distribution diagram of ray indexes of different materials in a coordinate system according to an embodiment of the present disclosure. The ordinate in FIG. 19 is the proportion of the high-energy count (ER), $p_{191}$, $p_{192}$ ... $p_{196}$ is the ordinate scale, and the unit may be a percentage. The abscissa is the ray count rate (CR), $c_{191}$, $c_{192}$ ... $c_{196}$ is the abscissa scale, and the unit may be counts per second (cps).

Taking the ray indexes of Fe detected at the position of the detector module P1 as an example, they are labeled "∘" in FIG. 19. Each "∘" corresponds to a point position on the flying point scan target object. The vertical axis coordinate of each "∘" is the index value of the first ray index, and the horizontal axis coordinate of each "∘" is the index value of the second ray index, that is, each "∘" may fuse information of the plurality of ray indexes. All "∘" are all the first ray indexes and all the second ray indexes corresponding to the position of the detector module P1. The same applies to Fe at the position of the detector module P2, PE at the position of the detector module P1, and Fe at the position of the detector module P2, which will not be described in detail herein.

As shown in FIG. 19, the first ray index and the second ray index of different materials have different spatial distributions, for example, the ray indexes (see label "∘") of Fe detected at the position of the detector module P1, and the ray indexes (see label "□") of the PE detected at the position of the detector module P1, are two clusters of labels distributed at different positions in the coordinate system. For example, the ray indexes (see label "∘") of Fe detected at the position of detector module P1, and the ray indexes (see label "•") of Fe detected at the position of the detector module P2, are two clusters of labels distributed at different positions in the coordinate system. Through pre-experimental testing, the above-mentioned information of measured objects with different materials and volumes may be stored in the database as characteristic data. When the device is running, appropriate algorithms (table lookup, fitting, pattern matching, neural network, etc.) may be used to find the material information closest to the actual data, thereby achieving the ability of material identification.

For example, an image as shown in FIG. 19 is formed, the image is input to a pre-trained neural network model, and the predicted material is output. The neural network model may be trained by using samples of measured objects with different materials and volumes, and each sample of measured object includes an image similar to that shown in FIG. 19 and a material label.

According to the embodiments of the present disclosure, by mapping to a coordinate system, the spatial distribution of each ray index may be clearly reflected, and more information may be provided to distinguish different materials.

It should be noted that the present disclosure is not limited to the two-dimensional coordinate system shown in FIG. 19, and for example, when calculating more ray indexes, the ray indexes may be mapped to a higher-dimensional coordinate system.

In some embodiments, the index values of each ray index at different positions are respectively matched with index information of different materials in operation S1202, where the index information of different materials includes pre-calculated index values at different positions. The material of the target object 1140 is identified based on a matching result.

For example, the index information of different materials includes a set of index values obtained by detecting various materials in advance by the backscatter detection apparatus as shown in FIG. 11, and index values of each ray index at different positions, for example, a plurality of index values at the same position, may be obtained by experiment or calculation. Matching refers to the process of comparing the index values of each ray index at different positions with the index information of known materials.

For example, the related labels of Fe in the image shown in FIG. 19 may be acquired, and then matched with images of index information of various materials pre-mapped in the same coordinate system in the database (e.g., by calculating similarity). Alternatively, the difference in index values of the same ray index at the same position may be directly compared.

According to the embodiments of the present disclosure, the accuracy of material identification is improved by matching the actual value of the ray index with the pre-calculated index information of different materials in the database.

In some embodiments, in the process of material identification, in conjunction with FIG. 11, and with reference to FIG. 7 and FIG. 8, the radiation source 1110 is used to emit radiation rays, and two backscatter detectors 1120 are provided on both sides of the radiation source 1110. Detecting the radiation ray signal using the plurality of detector modules 1121 of the backscatter detector 1120 includes: detecting the radiation ray signal using the plurality of detector modules 1121 of each of the two backscatter detectors 1120.

According to the embodiments of the present disclosure, using the two backscatter detectors 1120 may detect more radiation ray signals and obtain more information for material identification. For example, not only do the radiation ray signals detected by detector modules 1121 at different positions on the same backscatter detector 1120 have distribution differences, but also distribution differences of the radiation ray signals exist between the two backscatter detectors 1120.

In some embodiments, the two backscatter detectors 1120 distributed on both sides of the radiation source 1110 may have the same or different structures, and each detects radiation ray signals corresponding to different regions of the target object 1140. When the structures are different, the structure of each backscatter detector 1120 is determined according to the region of the detected target object 1140, and the detector structure includes the detection region area of each of the plurality of detector modules 1121.

For example, different regions on the target object 1140 have different structures and materials, and the Compton scattering distributions are also different, thus the structure of the corresponding backscatter detector 1120 may be determined according to the characteristics of each region. For example, the number and arrangement of the plurality of detector modules 1121 are different, and the detection region shapes, detection region sizes, and detection region areas of the detector modules 521 are not completely consistent.

According to the embodiments of the present disclosure, the backscatter detector 1120 on each side may detect the specific region of the target object 1140, and the detection accuracy and the material identification accuracy may be improved.

In some embodiments, before the matching the index values of each ray index at different positions with the index information of different materials, respectively, the method further includes: determining index information of a to-be-matched material based on the structure of each of the two backscatter detectors 1120, where the index information of the to-be-matched material is calculated according to radiation ray signals based on the to-be-matched material detected by two preset backscatter detectors, and the two preset backscatter detectors and the two backscatter detectors 1120 have one-to-one correspondence and substantially the same structure.

It may be understood that the detector area of each detector module 1121 is adapted to the target first count rate to a certain extent, so that the pile-up phenomenon may be avoided, the signal-to-noise ratio is better, the detection is more accurate, and the calculated index value of the ray index is more accurate. Therefore, different structures of the backscatter detectors 1120 affect the calculation results of the ray index at the same scanning point to a certain extent.

For example, each material may be identified in advance in the form of a simulation test. Two preset backscatter detectors may be arranged on both sides of a preset radiation source, and the preferred structure of each of the two preset backscatter detectors may be determined according to the characteristics of different regions of the target material. Then, the steps of radiation scanning, radiation detection, ray index calculation, etc. are performed. On the basis of accurately identifying the target material according to the distribution of ray indexes, relevant information (such as ray parameters, ray indexes, detector structures, etc.) is stored in the database. Taking the detector structure as an example, each detector module in each preset detector has a corresponding position code, the position code is stored in a mapped manner with the detector region area, and is bound to the identified material.

It should be noted that the materials involved in the present disclosure may include a raw material, or may include an article of the same category as the target object. For example, if the target object is a luggage of brand A with a specific model, the "material" may include the luggage of brand A with the specific model.

In the process of scanning the target object 1140, the detection region area of each detector module 1121 in each backscatter detector 1120 is adjusted according to the difference between the detected actual count rate and the target first count rate. After adjustment, the steps of radiation scanning, radiation detection and ray index calculation are performed. Then, the mapping relationship between the position code and the detector region area of each detector module of each backscatter detector 1120 is obtained, and one or more materials bound to the same or similar mapping relationship are retrieved in the database. Then, the index values of each ray index at different positions are respectively matched with the index information of the retrieved materials.

For example, the detector structures being substantially the same may mean that the difference of a certain number of detector region areas with the same position code is within a certain range.

According to the embodiments of the present disclosure, the multi-stage identification method in which first screening the detector structure and then performing the index matching may reduce the workload of matching and improve the accuracy of material identification.

In some embodiments, a radiation detection method is further provided, including: enabling a radiation source to emit a radiation ray to scan a target object, and enabling each of the at least one backscatter detector to detect a radiation ray signal, where the radiation ray signal includes a signal detected after the target object is scanned by the radiation ray.

It should be noted that for the parts not mentioned in the radiation detection method of the embodiment, reference may be made to the various embodiments of the backscatter detection apparatus corresponding to FIG. 5 to FIG. 10 described above. That is, the radiation detection method of the embodiment includes the steps of using the respective components of the backscatter detection apparatus corresponding to FIG. 5 to FIG. 10 as described above, respectively. Further, the implementation manners, the solved technical problems, the achieved functions, and the achieved technical effects are the same as or similar to the implementation manners, the solved technical problems, the achieved functions, and the achieved technical effects of the corresponding components in the apparatus embodiments, respectively, which will not be described in detail herein.

In some embodiments, there is further provided a method of identifying a material, including: detecting, in response to a radiation ray scanning a target object, a radiation ray signal using a plurality of detector modules of a backscatter detector, where the plurality of detector modules are arranged at different positions and ray signal channels are independent of each other; calculating N ray indexes corresponding to a position of each of the detector modules according to the radiation ray signal detected by each of the detector modules, where N is an integer greater than or equal to 1; and identifying a material of the target object according to index values of each of the ray indexes at different positions.

Exemplarily, the method of identifying a material of the embodiment may perform radiation detection by the above-mentioned radiation detection method, and then perform the steps of calculating the ray index and identifying the material by the processor. Alternatively, the method of identifying a material of the embodiment may perform backscatter detection by the radiation detection method existing in the related art or to be disclosed in the future, and then perform the steps of calculating the ray index and identifying the material by the processor.

It should be noted that for the parts not mentioned in the method of identifying a material of the embodiment, reference may be made to the various embodiments of the apparatus of identifying a material corresponding to FIG. 11 to FIG. 19 described above. That is, the method of identifying a material of the embodiment includes the steps of using the respective components of the apparatus of identifying a material corresponding to FIG. 11 to FIG. 19 as described above, respectively. Further, the implementation manners, the solved technical problems, the achieved functions, and the achieved technical effects are the same as or similar to the implementation manners, data processing flows, the solved technical problems, the achieved functions, and the achieved technical effects of the corresponding components in the apparatus embodiments, respectively, which will not be described in detail herein.

According to the embodiments of the present disclosure, the material resolution capability may be achieved by acquiring information such as energy, count rate, spatial distribution, and the like carried by backscatter X-rays, and the signal-to-noise ratio of radiation detection may be improved.

One or more of the above-mentioned embodiments have the following beneficial effects:

There are differences in the signals generated by the detector modules at different positions in the radiation detector, and additional information may be obtained by comparing these differences. A plurality of detector modules distributed at different positions use their respective ray signal channels to receive the radiation rays after scanning the target object, and one or more ray indexes corresponding to each position may be independently calculated. By analyzing the distribution difference of the index values of each ray index at different positions, the material of the target object may be accurately identified.

Those skilled in the art will appreciate that features recited in the various embodiments of the present disclosure and/or the claims may be combined and/or incorporated in a variety of ways, even if such combinations or incorporations are not clearly recited in the present disclosure. In particular, the features recited in the various embodiments of the present disclosure and/or the claims may be combined and/or incorporated in a variety of ways without departing from the spirit and teachings of the present disclosure, and all such combinations and/or incorporations fall within the scope of the present disclosure.

The embodiments of the present disclosure have been described above. However, these embodiments are for illustrative purposes only, and are not intended to limit the scope of the present disclosure. Although the various embodiments are described above separately, this does not mean that the measures in the various embodiments may not be advantageously used in combination. The scope of the present disclosure is defined by the appended claims and their equivalents. Without departing from the scope of the present disclosure, those skilled in the art may make various substitutions and modifications, and these substitutions and modifications should all fall within the scope of the present disclosure.

**Claims**

1. A method of identifying a material, comprising:

   detecting, in response to a radiation ray scanning a target object, a radiation ray signal using a plurality of detector modules (521, 1121) of a radiation detector, wherein the plurality of detector modules (521, 1121) are arranged at different positions and ray signal channels are independent of each other;
   calculating N ray indexes corresponding to a position of each of the detector modules (521, 1121) according to the radiation ray signal detected by each of the detector modules (521, 1121), wherein N is an integer greater than or equal to 1; and
   identifying a material of the target object according to index values of each of the ray indexes at different positions.

2. The method according to claim 1, wherein the N ray indexes comprise a first ray index and a second ray index, and the identifying a material of the target object according to index values of each of the ray indexes at different positions comprises:

   mapping index values of each of the first ray index and the second ray index at different positions in a coordinate system, wherein a vertical axis of the coordinate system corresponds to the first ray index, and a horizontal axis of the coordinate system corresponds to the second ray index; and
   identifying the material of the target object according to a distribution of each of the first ray index and the second ray index in the coordinate system.

3. The method according to claim 1, wherein the detecting, in response to a radiation ray scanning a target object, a radiation ray signal using a plurality of detector modules (521, 1121) of a radiation detector comprises:
   detecting, in response to a radiation source (110, 510, 1110) emitting the radiation ray to perform a flying spot scan on the target object, a backscattered ray signal reflected by the target object using the plurality of detector modules (521, 1121).

4. The method according to claim 3, wherein the calculating N ray indexes corresponding to a position of each of the detector modules (521, 1121) comprises:

   calculating, for each of the ray indexes, a plurality of index values corresponding to the position of each of the detector modules (521, 1121), wherein the plurality of index values correspond to a plurality of point positions of the flying spot scan one-to-one.

5. The method according to claim 1, wherein before the calculating N ray indexes corresponding to a position of each of the detector modules (521, 1121), the method further comprises:

   assigning a corresponding position identifier according to the position of each of the detector modules (521, 1121),
   wherein the N ray indexes corresponding to the position of each of the detector modules (521, 1121) are bound to the position identifier of the detector module (521, 1121).

6. The method according to any one of claims 1 to 5, wherein before the calculating N ray indexes corresponding to a position of each of the detector modules (521, 1121), the method further comprises:

   performing an energy threshold determination on a plurality of groups of ray signals to screen out ray signals in different energy ranges from each group of ray signals, wherein the plurality of groups of ray signals correspond to the plurality of detector modules (521, 1121) one-to-one; and
   acquiring number of ray signals in different energy ranges in each group of ray signals.

7. The method according to claim 6, wherein the calculating N ray indexes corresponding to a position of each of the detector modules (521, 1121) comprises: for each group of ray signals,

   acquiring target number of ray signals in a target energy range among the different energy ranges; and
   calculating a ratio of the target number to number of total ray signals to obtain the first ray index, wherein the number of total ray signals is obtained according to a sum of the numbers of all ray signals in the different energy ranges.

8. The method according to claim 6, wherein the calculating N ray indexes corresponding to a position of each of the detector modules (521, 1121) comprises: for each group of ray signals,
   calculating a ratio of number of total ray signals to a counting period to obtain the second ray index, wherein the number of total ray signals is obtained according to a sum of the numbers of all ray signals in the different energy ranges, and the counting period comprises a period of acquiring the number.

9. The method according to any one of claims 1 to 5, 7, and 8, wherein the identifying a material of the target object according to index values of each of the ray indexes at different positions comprises:

   matching the index values of each of the ray indexes at different positions with index information of different materials respectively, wherein the index information of the different materials comprises pre-calculated index values of the different materials at different positions; and
   identifying the material of the target object based on a matching result.

10. The method according to claim 9, wherein the radiation ray is emitted by a radiation source (110, 510, 1110), and two radiation detectors are provided on both sides of the radiation source (110, 510, 1110); wherein the detecting a radiation ray signal using a plurality of detector modules (521, 1121) of a radiation detector comprises:
    detecting the radiation ray signal using the plurality of detector modules (521, 1121) of each of the two radiation detectors.

11. The method according to claim 10, wherein the two radiation detectors distributed on both sides of the radiation source (110, 510, 1110) have different structures, and respectively detect radiation ray signals corresponding to different regions of the target object,
    wherein the structure of each of the radiation detectors is determined according to the region of the target object being detected, and the structure comprises a detection region area of each of the plurality of detector modules (521, 1121).

12. The method according to claim 11, wherein, before the matching the index values of each of the ray indexes at different positions with index information of different materials respectively, the method further comprises:

    determining index information of a to-be-matched material based on the structure of each of the two radiation detectors,
    wherein the index information of the to-be-matched material is calculated according to radiation ray signals based on the to-be-matched material and detected by two preset radiation detectors, and the two preset radiation detectors and the two radiation detectors have one-to-one correspondence and substantially the same structure.

13. An apparatus of identifying a material configured to perform the method according to any one of claims 1 to 12, the apparatus comprising:

a radiation detector configured to detect, in response to a radiation ray scanning a target object, a radiation ray signal using a plurality of detector modules (521, 1121), wherein the plurality of detector modules (521, 1121) are arranged at different positions and ray signal channels are independent of each other; and
a processor communicatively connected to the radiation detector and configured to:

calculate N ray indexes corresponding to a position of each of the detector modules (521, 1121) according to the radiation ray signal detected by each of the detector modules (521, 1121), wherein N is an integer greater than or equal to 1; and
identify a material of the target object according to index values of each of the ray indexes at different positions.

100

110

Radiation source

130

Electronic device

Target
object

120

150

140

Sensitive
volume

Photo-
electric
converter

Ray

121

122

Electronics

160

FIG. 1

$e_{28}$

$e_{27}$

$e_{26}$

$e_{25}$

Energy

$e_{24}$

$e_{23}$

$e_{22}$

$e_{21}$

$t_{21}$ $t_{22}$ $t_{23}$ $t_{24}$ $t_{25}$ $t_{26}$ $t_{27}$ $t_{28}$ $t_{29}$

Time

FIG. 2

FIG. 3

FIG. 4

500

510

Radiation source

520

Detector module

Detector module

e e e e

Detector module

Detector module

540

Target object

Ray

521

550

530

Electronic device

Electronics

560

FIG. 5

520

$y$

521-3

521-1

510

521-2

$d_{51}$

$d_{52}$

Ray beam emission region

$x$

FIG. 6

FIG. 7

FIG. 8

FIG. 9

FIG. 10

1100

1110

Radiation source

1130

1120

Electronic device

1150

Processor 1131

Target
object

Detector module

Detector module

℮ ℮ ℮ ℮

Detector module

Electronics

Detector module

1160

1140  Ray

1121

FIG. 11

1120

S1201

Detector module

N ray indexes

Detector module

N ray indexes

℮ ℮ ℮ ℮

Electronics

Processor 1131

℮ ℮ ℮ ℮

Detector module

N ray indexes

Detector module

1160

N ray indexes

1121

S1202

Material of the
target object

FIG. 12

FIG. 13

FIG. 14

FIG. 15

FIG. 16

FIG. 17

FIG. 18

FIG. 19

Europäisches
Patentamt

European
Patent Office

Office européen
des brevets

# EUROPEAN SEARCH REPORT

**Application Number**

EP 25 18 6308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/003834 A1 (PROCTER MARK [GB] ET AL) 4 January 2024 (2024-01-04) * paragraphs [0002], [0003], [0077] - [0079], [0134] - [0141] * * figures 1-9 * | 1-13 | INV. G01N23/203 G01V5/222 |
| X | EP 3 239 699 A1 (NUCTECH CO LTD [CN]) 1 November 2017 (2017-11-01) * paragraphs [0001], [0002], [0041] - [0106] * * figures 1-17 * | 1,3,4, 10,11,13 | |
| X | US 6 320 933 B1 (GRODZINS LEE [US] ET AL) 20 November 2001 (2001-11-20) * column 1, lines 7-22 * * column 2, line 1 - column 5, line 35 * * figures 1-3 * | 1,10,13 | |

| TECHNICAL FIELDS SEARCHED (IPC) |
|---|
| G01N G01V |

The present search report has been drawn up for all claims

| Place of search | Date of completion of the search | Examiner |
|---|---|---|
| The Hague | 4 December 2025 | Couteau, Olivier |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 6308

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2025

| Patent document cited in search report | | Publication date | Patent family member(s) | | Publication date |
|---|---|---|---|---|---|
| US 2024003834 | A1 | 04-01-2024 | NONE | | |
| EP 3239699 | A1 | 01-11-2017 | CN | 105807328 A | 27-07-2016 |
| | | | EP | 3239699 A1 | 01-11-2017 |
| | | | MY | 188305 A | 26-11-2021 |
| US 6320933 | B1 | 20-11-2001 | US | 6320933 B1 | 20-11-2001 |
| | | | WO | 0033059 A2 | 08-06-2000 |

EPO FORM P0459

For more details about this annex : see Official Journal of the European Patent Office, No. 12/82